## Europäisches Patentamt

(19) **European Patent Office**

**Office européen des brevets**

(11) Veröffentlichungsnummer: **0 071 714**
**B1**

(12) # EUROPÄISCHE PATENTSCHRIFT

(45) Veröffentlichungstag der Patentschrift:
05.02.86

(51) Int. Cl.⁴: **B 60 N 1/06**

(21) Anmeldenummer: **82105123.2**

(22) Anmeldetag: **11.06.82**

(54) Gelenk, insbesondere für Liegen, Feldsitze od.dgl.

(30) Priorität: **23.07.81 DE 3129089**

(43) Veröffentlichungstag der Anmeldung:
**16.02.83 Patentblatt 83/7**

(45) Bekanntmachung des Hinweises auf die Patenterteilung:
**05.02.86 Patentblatt 86/6**

(84) Benannte Vertragsstaaten:
**AT DE FR GB IT NL**

(56) Entgegenhaltungen:
**DE - A - 2 846 360**
**FR - A - 1 457 661**
**FR - A - 1 512 426**
**FR - A - 2 211 897**
**US - A - 3 288 527**
**US - A - 4 099 777**

(73) Patentinhaber: **Rauschenberger, Jörg, Gartenstr. 8,**
**D-7144 Asperg (DE)**

(72) Erfinder: **Rauschenberger, Jörg, Gartenstr. 8,**
**D-7144 Asperg (DE)**

(74) Vertreter: **Dreiss, Uwe, Dr. jur. Dipl.-Ing. M.Sc.,**
**Patentanwälte Dreiss, Hosenthien & Fuhlendorf**
**Gerokstrasse 6, D-7000 Stuttgart 1 (DE)**

LIBER, STOCKHOLM 1986

# 0 071 714

## Beschreibung

Die Erfindung betrifft ein Gelenk, insbesondere für Liegen, Feldsitze od.dgl. mit einem zwischen verschiedenen Winkellagen schwenk- und arretierbaren, eine Lehne tragenden Gelenkteil und einem mindestens mit diesem Gelenkteil zusammenwirkenden Zwischenglied , beispielsweise einer Rastenscheibe , wobei der Gelenkteil mindestens in seinem arretierbaren Schwenkbereich durch mindestens ein Kraftglied , beispielsweise in Form einer Feder oder Gasfeder mindestens in Schließrichtung kraftunterstützt schwenkbar und durch die Arretierung festlegbar ist.

Ein solches aus der DE-A- 23 60 267 bekanntes Gelenk wird bei Kraftfahrzeugvordersitzen verwendet. Als Kraftglied dient dort eine Spiralfeder. Diese baut relativ voluminös, wenn eine ausreichende Energie speicherbar sein soll. Beim Lösen der Arretierung wird sofort die vollständige Federkraft frei, so daß die Lehne hochschlagen kann. Bei Kraftfahrzeugsitzen ist diese wenig nachteilig, da hier die Lehne beim Verstellen durch eine Person belastet ist. Bei der Verwendung eines solchen Gelenks für Feldsitze oder Liegen könnte ein solches Hochschlagen gefährlich werden.

Schließlich ist aus der DE-OS 28 46 360 die Neigungsverstellung eines Bürodrehstuhls unter Verwendung wenigstens einer arretierbaren Gasfeder bekannt.

Aufgabe der vorliegenden Erfindung ist es, das aus der DE-A- 23 60 267 bekannte Gelenk so auszubilden, daß die durch die Feder gespeicherte Energie möglichst optimal im gewünschten Verstellwinkelbereich der Lehne eingesetzt wird, um das erforderliche Federvolumen so klein wie möglich zu halten.

Zur Lösung dieser Aufgabe sieht die Erfindung vor, daß das Zwischenglied in einem Schwenkbereich des Gelenkteils zwischen etwa der horizontalen und einer etwa senkrechten Stellung der Lehne diesen Gelenkteil in seiner Aufschwenkrichtung abstützt bzw. in diesem Schwenkbereich mit dem Gelenkteil gekoppelt und im übrigen Schwenkbereich das Gelenkteil davon getrennt schwenkbar ist.

Zweckmäßigerweise wirkt dann das Kraftglied direkt oder indirekt auf das Zwischenglied, das nur im kraftunterstützten Schwenkbereich, in dem es mit dem Gelenkteil gekoppelt ist bzw. den Gelenkteil unterstützt, schwenkbar sein braucht. Damit kann das Zwischenglied mit möglichst direkter Obersetzung mit dem Kraftglied gekoppelt sein, um so eine möglichst kleine Obersetzung des Kraftwegs des Kraftglieds gegenüber dem Zwischenglied notwendig zu machen.

Besonders vorteilhaft kann als Arretierung und zugleich als Kraftglied mindestens eine blockierbare Gasfeder dienen, deren eines Ende direkt oder indirekt am Zwischenglied angelenkt ist. Durch die Verwendung der blockierbaren Gasfeder ist die Anordnung einer zusätzlichen Blockierung mittels beispielsweise einer Zahnscheibe und einem entsprechenden Sperrhebel nicht mehr erforderlich, so daß eine einfache Konstruktion mit geringem Gewicht möglich ist. Zweckmäßigerweise ist die Gasfeder gedämpft ausgeführt, so daß ein ungewolltes Schlagen der Lehne nicht eintreten kann. Konstruktiv besonders einfach stabil und kompakt kann als Zwischenglied mindestens eine um die gleiche Schwenkachse wie der die Lehne tragende Gelenkteil schwenkbare Blechscheibe dienen, die mit dem Gelenkteil in Abhängigkeit von dessen Stellung gekoppelt oder freigegeben ist bzw. den Gelenkteil in seiner Aufschwenkrichtung im Arretierzustand abstützt.

Mechanisch besonders einfach kann an der Blechscheibe ein mit dem die Lehne tragenden Gelenkteil zusammenwirkender Riegel gegen eine Feder schwenkbar gelagert sein, und daß dieser Riegel mit dem Gelenkteil verrastbar und damit das Kraftglied mit dem Gelenkteil direkt oder indirekt koppelbar ist, wobei die Verrastung durch die Lage des Gelenkteils selbst gesteuert ist. Dabei kann der Riegel in einer Endlage des Zwischenglieds den Gelenkteil freigeben und in allen anderen Stellungen des Zwischenglieds mit dem Gelenkteil gekoppelt sein. Platzsparend kann der Riegel und ein Ende des Kraftglieds auf einem gemeinsamen Lagerbolzen am freien Ende des Zwischenglieds schwenkbar gelagert sein und es kann dann das andere Ende des Kraftglieds an der Gehäuseschale ebenfalls schwenkbar angelenkt sein.

Zur von der Lage des Zwischenglieds abhängigen Kopplung und Entkopplung von Zwischenglied und Gelenkteil kann unter Teileinsparung der Riegel ein zweiarmiger Hebel sein, dessen eines Armende einen mit dem Gelenkteil zusammenwirkenden Haken trägt und dessen anderes Armende zur Riegelbetätigung mit einem Anschlag zusammenwirkt.

Einen besonders stabilen auch hohe und stoßartige Kräfte aufnehmenden Aufbau des Gelenks kann man dadurch erreichen, daß der Gelenkteil zwei durch eine Querwand miteinander verbundene zur Rastscheibe parallele, vorzugsweise etwa dreieckförmige Seitenplatten aufweist, und daß in der der gemeinsamen Achse gegenüberliegenden Querwand ein Durchbruch für den Haken des Riegels vorgesehen ist. Dabei kann zur Herabsetzung der Flächenpressung jeweils eine Seite der Seitenplatten des Gelenkteils im rastbaren Schwenkbereich sich an Anlageflächen des Zwischenglieds abstützen. Zur weiteren Formstabilisierung können die Anlageflächen durch Ausprägungen gebildet sein.

Das Zwischenglied kann zur Aufnahme hoher Kräfte und kleiner Bauweise durch zwei gegebenenfalls am Außenumfang die Rastzähne tragende 1/4-Kreisblechscheiben bzw. Blechscheiben gebildet sein, die auf ihren dem Kraftglied gegenüberliegenden Seiten über eine Verbindung miteinander verbunden sind, wobei ein Ende des Kraftglieds zwischen den Scheiben angeordnet durch einen in ihnen gehaltenen Lagerbolzen gelagert ist. Dabei kann das untere Ende der Querwand des Gelenkteils im gekoppelten Schwenkbereich an der Verbindung der Scheiben des Zwischenglieds anliegen. Die auftretenden Kräfte können so möglichst verschleißfrei bei geringer Flächenpressung übertragen werden.

Besonders vorteilhaft kann bei einem Gelenk mit einem mindestens im gekoppelten bzw. abgestützten Schwenkbereich des Gelenkteils verriegelten, an der Gelenkschale schwenkbar gelagerten Fußteil dieser Fußteil durch einen Fußriegel verriegelbar sein, wobei dann dieser Fußriegel im rastbaren Schwenkbereich der Rastenscheibe den Fußteil festhält und in der Endstellung der Scheibe oder Rastenscheibe freigibt. Hierzu ist der Fußriegel direkt oder indirekt durch das Zwischenglied steuerbar.

Konstruktiv besonders vorteilhaft können sowohl der Riegel für den Gelenkteil als auch der Fußriegel für den Fußteil durch die Bewegung des Zwischenglieds steuerbar sein. Dazu können beide Riegel als zweiarmige Hebel ausgebildet sein, wobei die freien Enden beider Hebel in der Endlage der Scheibe bzw. Rastenscheibe aneinander anliegend den Gelenkteil und den Fußteil freigeben.

Weitere erfindungsgemäße Ausbildungen sind den Unteransprüchen zu entnehmen und werden mit ihren Vorteilen in der nachstehenden Beschreibung näher erläutert. In den beigefügten Zeichnungen zeigt:

Figur 1 einen Schnitt durch ein Gelenk mit nahezu aufgerichtetem noch arretierten Gelenkteil und strichpunktiert eingezeichneter Zusammenklapplage des Gelenkteils,

Figur 2 eine der Fig. 1 entsprechende Darstellung mit weiter hochgeschwenktem Gelenkteil, das zum Zusammenklappen freigegeben ist und mit entriegeltem Fußteil,

Figur 3 das in den Fig. 1 und 2 im Schnitt dargestellte Gelenk in ausgestreckter Ruhelage des Gelenkteiles,

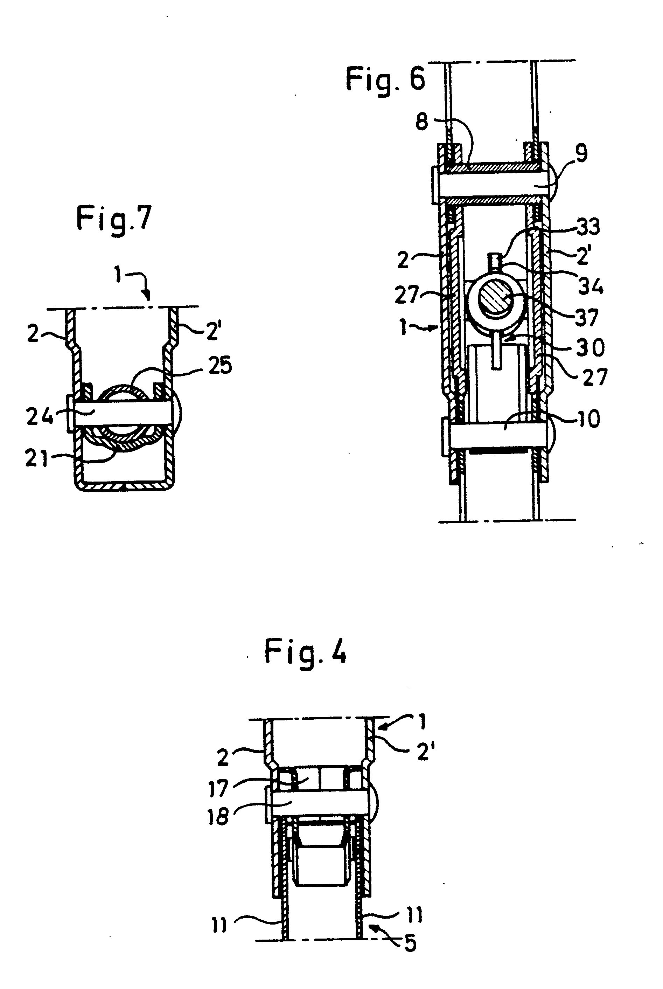

Figur 4 einen Schnitt gemäß der Linie IV-IV in Fig. 1 durch die Lagerung des Fußteils,

Figur 5 einen Längsschnitt durch das in Fig. 1 dargestellte Gelenk längs der Linie V-V,

Figur 6 einen Schnitt durch die Lagerung von Gelenkteil und Fußteil entlang der Linie VI-VI in Fig. 1,

Figur 7 einen Schnitt durch die Lagerung des Sperrhebels entlang der Linie VII-VII in Fig. 1,

Figuren 8 und 9 zwei der Fig. 1 entsprechende Darstellungen zweier weiterer Ausführungsformen von Gelenken und

Figur 10 eine weitere Ausführungsform eines Gelenks.

Bei allen dargestellten Ausführungsbeispielen werden für entsprechende Teile die gleichen Bezugszeichen verwendet.

Die in den Figuren dargestellten Gelenke weisen eine Gehäuseschale 1 auf, zwischen deren Außenwänden 2,2' ein Kraftglied 3 in Form einer Gasfeder, ein eine Seite einer nicht dargestellten Lehne tragenden Gelenkteil 4 und ein Fußteil 5 schwenkbar gelagert sind. Dazu ist ein Ende der Gasfeder 3 über einen Bolzen 6, der Gelenkteil 4 und eine Rastenscheibe 7 über eine Hülse 8 und einen Bolzen 9 und der Fußteil 5 mittels eines Lagerbolzens 10 schwenkbar befestigt.

Der Fußteil 5 weist zwei in der Gehäuseschale 1 auf dem Lagerbolzen 10 geführte parallele im Abstand angeordnete Platten 11 auf, die einstückig dem Lagerbolzen 10 gegenüberliegend durch eine Seitenwand 12 miteinander verbunden sind. Die Seitenwand 12 bildet an ihrem oberen Ende einen Endanschlag 13, der mit einer Querwand 14 der Gehäuseschale 1 in der Aufstellage des Fußteils 5 zusammenwirkt und dort anliegt. Weiter ist in der Seitenwand 12 im Abstand vom Endanschlag 13 ein in den Figuren gestrichelt eingezeichneter Durchbruch 15 vorgesehen, in dem eine Nase 16 eines Fußriegels 17 in der Betriebsstellung des Fußteils 5 eingerastet ist. Der als zweiarmiger Hebel ausgebildete Fußriegel 17 ist dabei schwenkbar auf einem Niet 18 gelagert und durch eine Feder 19 in der Verriegelungslage gehalten.

Die Feder 19 selbst ist eine Blattfeder. Ihr fuß- riegelseitiges Ende ist dabei kreisförmig gebogen im Zwischenraum zwischen dem Fußriegel 17 und dem Lagerbolzen 10, diesen teilweise umschlingend angeordnet, so daß die Feder 19 durch ihre eigene Federkraft in dieser Lage gehalten ist. Der dem Fußriegel 17 gegenüberliegende lange Schenkel 20 der Feder 19 ist leicht abgewinkelt und liegt am freien Ende eines Sperrhebels 21 an und drückt dessen Verzahnung 22 in die Rastenzähne 23 der Rastenscheibe 7, um so diese Rastenscheibe 7 in ihrer eingestellten Lage zu arretieren und jede Schwenkbewegung zu verhindern. Der Sperrhebel 21 mit U-förmigem Querschnitt ist auf einem Bolzen 24 in der Gehäuseschale 1 schwenkbar gelagert und über ein aus der Gehäuseschale 1 nach außen ragendes Rohr 25 betätigbar. Das Rohr 25 bildet dazu eine Handbetätigung 26.

Entsprechend dem U-förmigen Querschnitt des Sperrhebels 21 ist auch die Rastenscheibe 7 durch zwei im Abstand angeordnete 1/4-Kreisblechscheiben 27 gebildet, die auf ihrer dem Gelenkteil 4 zugewandten Seite über eine Verbindung 28 insgesamt einstückig miteinander verbunden sind. In dieser Verbindung 28 ist eine Aussparung 29 für einen Riegel 30 vorgesehen, der zwischen den 1/4-Kreisblechscheiben 27 in einem Schlitz 31 des Kraftglieds 3 auf einem Lagerbolzen 32 schwenkbar gelagert ist. Auf dem Lagerbolzen 32 ist auch das dem Bolzen 6 gegenüberliegende Ende des Kraftglieds 3 gelagert.

Auch der Riegel 30 ist ein zweiarmiger Hebel. An einem Ende ist ein Haken 33 vorgesehen, durch den der Gelenkteil 4 in einem Durchbruch 34 seiner Querwand 35 gehalten ist, wobei die Querwand 35 zwei Seitenplatten 36, die etwa dreieckförmig ausgebildet sind, miteinander verbindet und so einen formstabilen Gelenkteil 4 abgibt. Damit ist über den Haken 33 in den Betriebslagen der Gelenkteil 4 mit der Rastenscheibe 7 gekoppelt und so ist in diesem Schwenkbereich eine Bewegung nur nach einem Abheben des Sperrhebels 21 durch die Handbetätigung 26 möglich.

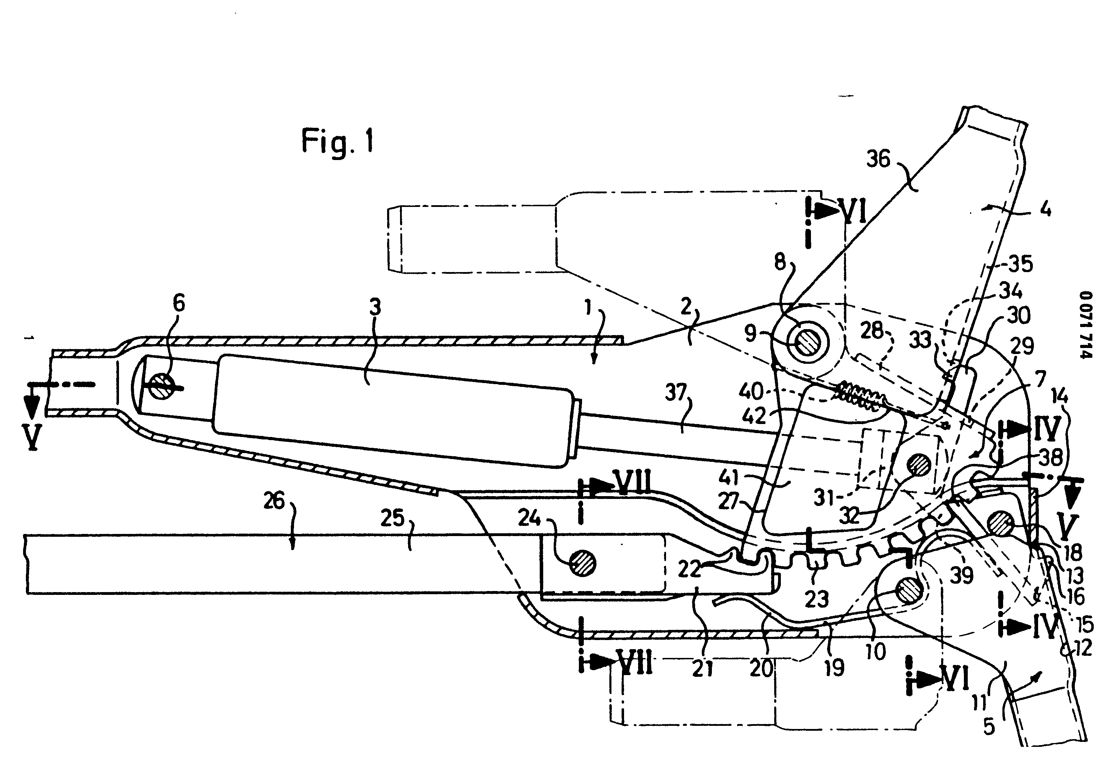

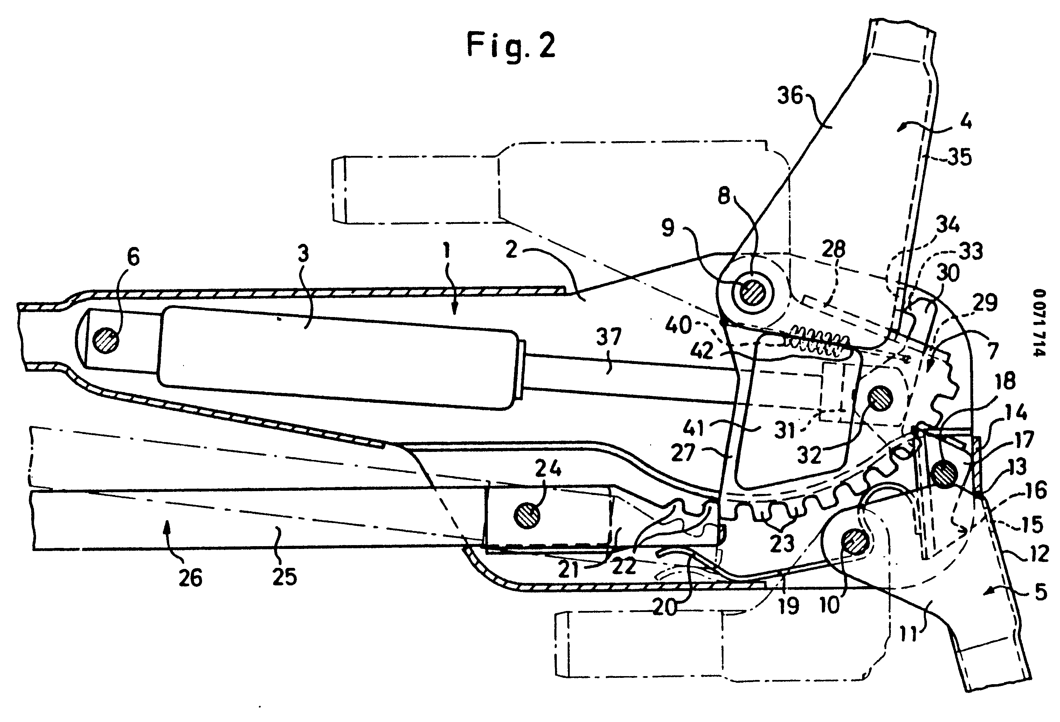

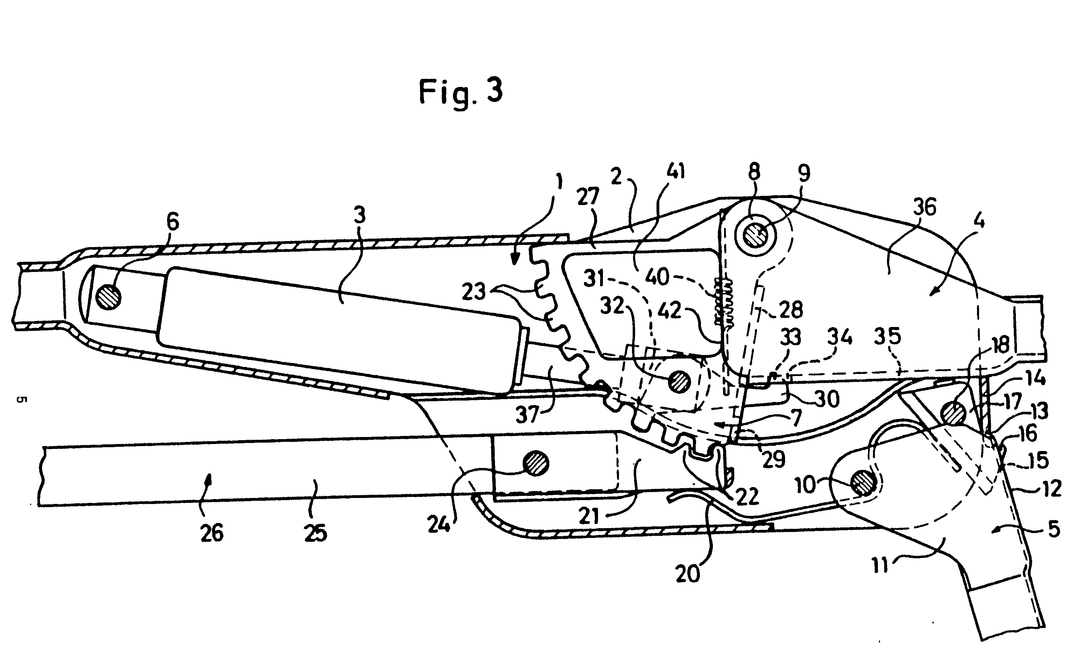

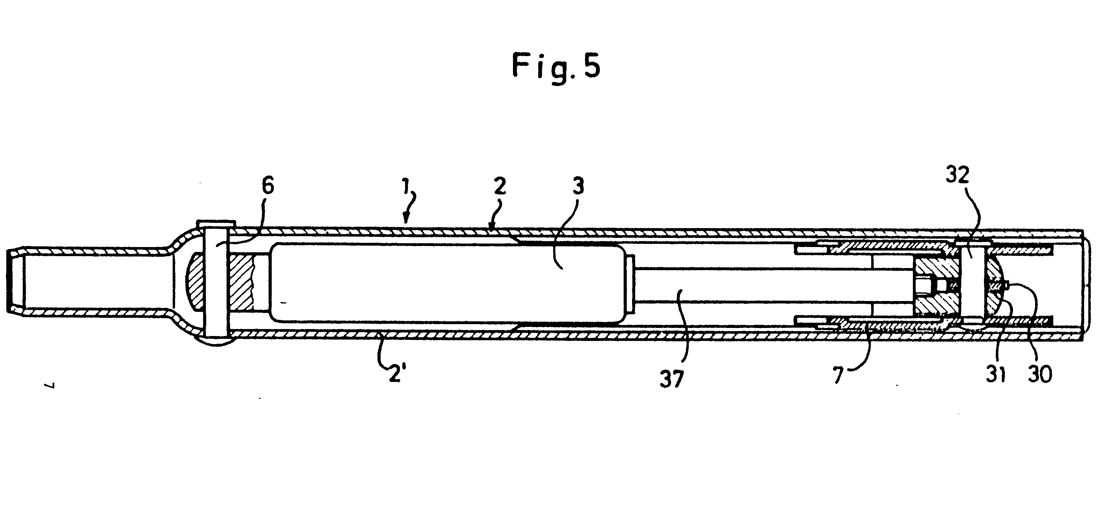

Das Kraftglied 3 ist eine Gasfeder, deren Kolbenstange 37 durch den Gasspeicherdruck stets in Richtung zum Lagerbolzen 32 hin kraftbeaufschlagt ist. Hierdurch wird bei einem Lösen des Sperrhebels 21 der Gelenkteil 4 hochgeschwenkt und bis in die in Fig. 2 dargestellte Lage durch das Kraftglied 3 verschwenkt. In dieser Lage kommen die freien Enden 38 und 39 des Fußriegels 17 bzw. des Riegels 30 aneinander zu Anlage, so daß sich beide Hebel 17 und 30 gegen die Wirkung der Feder 19 bzw. einer Zugfeder 40 wegschwenken und so den Fußteil 5 und den Gelenkteil 4 freigeben,so daß dann diese beiden Teile 5 bzw. 4 in die in Fig. 1 strichpunktiert eingezeichneten Ruhelagen schwenken lassen, in denen dann die Liege zum platzsparenden Aufräumen zusammengeklappt ist (Fig. 1 und 2). Im in Fig. 2 eingezeichneten Schwenkbereich zwischen der ausgezogenen

**0 071 714**

und der strichpunktierten Lage des Gelenkteils 4 kann das Kraftglied 3 nicht auf den Gelenkteil 4 wirken und dieser Gelenkteil 4ist in diesem Schwenkbereich kräftefrei schwenkbar, während im übrigen Schwenkbereich zwischen der in Fig. 2 und 3 ausgezogen dargestellten Darstellungen das Kraftglied 3 wirksam ist und versucht, die Rastenscheibe 7 und damit auch den Gelenkteil 4 nach oben zu verschwenken. Um keine zu hohe Schwenkgeschwindigkeit bei einer Freigabe zu erhalten, ist die Bewegung der Kolbenstange 37 gedämpft. In der Arbeitslage liegt die Querwand 35 des Gelenkteils 4 an der Verbindung 28 der Rastenscheibe 7 an. Zur Vergrößerung der Berührungsfläche sind die 1/4Kreisblechscheiben 27 mit einer versteifenden Ausprägung 41 versehen und bilden so jeweils eine Anlagefläche 42 für die Seitenplatten 36.

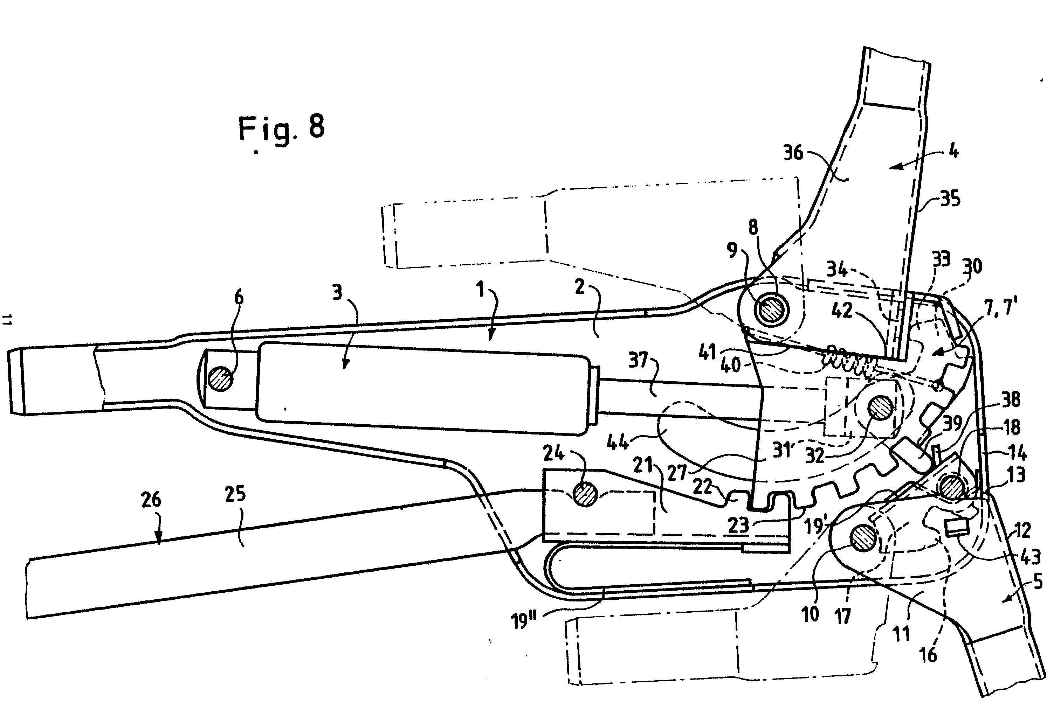

Das in Fig. 8 dargestellte Ausführungsbeispiel entspricht weitgehend dem Ausführungsbeispiel der Fig. 1. Anstelle der zwei Aufgaben erfüllenden Feder 19 sind dort für den Fußriegel 17 eine Schenkelfeder 19' und für die Handbetätigung 26 eine U-förmig gebogene Blattfeder 19' angeordnet.

Der im Querschnitt U-förmi9 ausgebildete Fußriegel 17 hintergreift mitseinen beiden Nasen 16 nach innen gezogene Vorsprünge 43 der Platten 11 des Fußteils 5. Die Vorsprünge 43 werden durch freigeschnittene nach innen gezogene Abwinklungen gebildet.

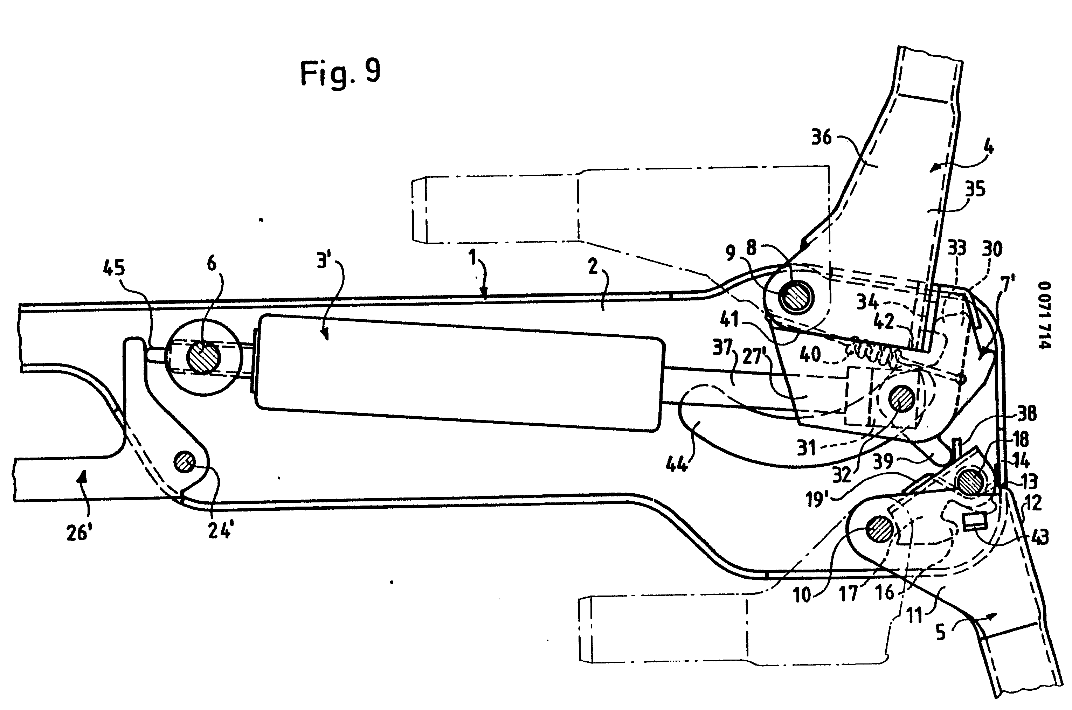

Beim in Fig. 9 dargestellten Ausführungsbeispiel wird als Kraftglied 3 eine blockierbare Gasfeder verwendet, die über die Handbetätigung 26' und eine Auslösevorrichtung 45 entriegel- und verriegelbar ist. Dadurch erübrigt sich die Anordnung einer stufenweise verstellbaren Rastenscheibe 7. Damit kann das Zwischenglied 7' wesentlich einfacher und kleiner ausgebildet sein. Im übrigen entspricht die Konstruktion der Fig. 9 weitgehend der Konstruktion der Fig. 8, wobei der Gelenkteil 4 durch die blockierbare Gasfeder 3' im arretierbaren Schwenkbereich stufenlos in beiden Richtungen einstellbar ist.

Die Vorspannkraft des Kraftglieds 3 ist zweckmäßigerweise so bemessen, daß der Gelenkteil 4 mit dem Eigengewicht der Lehne von seiner geöffneten Stellung bis in seine etwa senkrechte Stellung beim Lösen der Arretierung von selbst entgegen dem Eigengewicht hochschwenkbar ist, so daß eine den Sitz oder die Liege verwendende Person die Lehne während des Gebrauchs durch Lösen der Arretierung und entsprechendes Beugen des Oberkörpers verstellen kann, ohne daß die Lehne von Hand nachgeführt werden muß. Hierdurch wird eine besonders komfortable mühelose Neigungsverstellung ermöglicht.

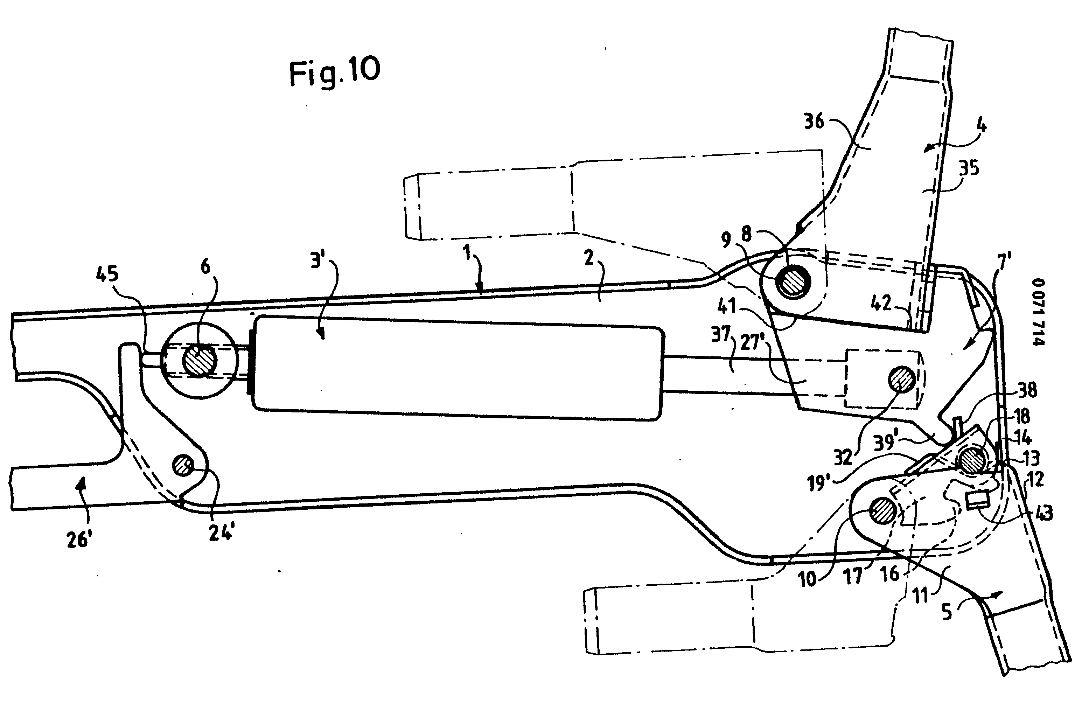

Beim in Fig. 10 dargestellten Ausführungsbeispiel ist der Gelenkteil 4 zwischen seiner senkrechten Lage und seiner strichpunktiert dargestellten zugeklappten Lage frei schwenkbar. Im übrigen Schwenkbereich liegt er ohne zusätzliche Arretierung am Zwischenglied 7' an. Gegenüber der in Fig. 9 dargestellten Ausführungsform entfällt also nur der Riegel 30. In der dargestellten Stellung stößt das Zwischenglied 7 oben an der Gehäuseschale 1 an. Wird über die Handbetätigung 26' die Auslösevorrichtung 45 der blockierbaren Gasfeder 3' gelöst, so kann beispielsweise durch Lehnenbelastung der Gelenkteil 4 in Öffnungsrichtung gegen die Kraft der Gasfeder 3' in Öffnungsrichtung beliebig bis zur Horizontalen verschwenkt werden, beispielsweise einfach durch eine Oberkörperverlagerung. Nach Loslassen der Handbetätigung 26' erfolgt eine Blockierung der Gasfeder 3' und es kann in Öffnungsrichtung der Gelenkteil 4 nicht mehr weiterverschwenkt werden. Dagegen ist eine Verschwenkung in Schließrichtung möglich, da der Gelenkteil 4 nicht mit dem Zwischenglied 7' gekoppelt ist. Wird eine steilere Lehnenlage gewünscht, so kann wiederum die Handbetätigung 26 betätigt und damit die Gasfeder 3' entriegelt werden. Die Gasfeder 3' versucht das Zwischenglied 7' in Schließrichtung des Gelenkteils 4 zu verschwenken. Beispielsweise durch Anheben des Oberkörpers kann die Schwenkbewegung des Gelenkteils 4 freigegeben und so eine bequeme Steilerstellung der Lehne ohne besonderes Anheben selbsttätig in die gewünschte Stellung bis maximal zur Senkrechten erreicht werden.

In der senkrechten Stellung des Gelenkteils 4 wird über einen Vorsprung 39' des Zwischenglieds 7' der Fußriegel 17 entriegelt und der Fußteil 5 zum Zusammenklappen in seine in Fig. 10 strichpunktiert dargestellte Stellung freigegeben.

**Patentansprüche**

1. Gelenk, insbesondere für Liegen, Feldsitze od.dgl. mit einem zwischen verschiedenen Winkellagen schwenkund arretierbaren, eine Lehne tragenden Gelenkteil (4) und einem mindestens mit diesem Gelenkteil (4) zusammenwirkenden Zwischenglied (7'), beispielsweise einer Rastenscheibe (7), wobei der Gelenkteil (4) mindestens in seinem arretierbaren Schwenkbereich durch mindestens ein Kraftglied (3) wahlweise in Form einer Feder oder Gasfeder (3') mindestens in Schließrichtung kraftunterstützt schwenkbar und durch die Arretierung festlegbar ist, dadurchgekennzeichnet, daß das Zwischenglied (7', Rastenscheibe 7) in einem Schwenkbereich des Gelenkteils (4) zwischen etwa der horizontalen und einer etwa senkrechten Stellung der Lehne diesen Gelenkteil (4) in seiner Aufschwenkrichtung abstützt bzw. in diesem Schwenkbereich mit dem Gelenkteil (4) gekoppelt und im übrigen Schwenkbereich das Gelenkteil (4) davon getrennt schwenkbar ist.

2. Gelenk nach Anspruch 1, dadurch gekennzeichnet, daß als Arretierung und zugleich als Kraftglied (3) mindestens eine blockierbare Gasfeder (3') dient, deren eines Ende direkt oder indirekt am Zwischenglied (7') angelenkt ist.

3. Gelenk nach Anspruch 1 oder 2, dadurch gekennzeichnet, daß als Zwischenglied (7') mindestens eine um die gleiche Schwenkachse (9) wie der die tragende Gelenkteil (4) schwenkbare Blechscheibe (27') dient, die mit dem Gelenkteil (4) in Abhängigkeit von dessen Stellung gekoppelt oder freigegeben ist bzw. den Gelenkteil (4) in seiner Aufschwenkrichtung im arretierten Zustand abstützt.

4

4. Gelenk nach Anspruch 3, dadurch gekennzeichnet, daß an der Blechscheibe (27') ein mit dem die Lehne tragenden Gelenkteil (4) zusammenwirkender Riegel (30) gegen eine Feder (40) schwenkbar gelagert ist und daß dieser Riegel (30) mit dem Gelenkteil (4) verrastbar und damit das Kraftglied (3) mit dem Gelenkteil (4) direkt oder indirekt koppelbar ist, wobei die Verrastung durch die Lage des Gelenkteils (4) oder des Zwischenglieds (7') gesteuert ist.

5. Gelenk nach Anspruch 4, dadurch gekennzeichnet, daß der Riegel (30) in einer Endlage des Zwischenglieds (7') den Gelenkteil (4) freigibt und in allen anderen Stellungen des Zwischenglieds (7') mit diesem gekoppelt ist.

6. Gelenk nach Anspruch 4 oder 5, dadurch gekennzeichnet, daß der Gelenkteil (4) zwei durch eine Querwand (35) miteinander verbundene zur Rastenscheibe (7) parallele, vorzugsweise etwa dreieckförmige Seitenplatten (36) aufweist und daß in der der gemeinsamen Achse (9) gegenüberliegenden Querwand (35) ein Durchbruch (34) für den Haken (33) des Riegels (30) vorgesehen ist.

7. Gelenk nach Anspruch 5 oder 6, dadurch gekenn- zeichnet, daß das Zwischenglied (7', Rastenscheibe 7) durch zwei gegebenenfalls am Außenumfang die Rastenzähne (23) tragende 1/4-Kreisblechscheiben (27) bzw. Blechscheiben (27') gebildet ist, die auf ihren dem Kraftglied (3) gegenüberliegenden Seiten über eine Verbindung (28) miteinander verbunden sind und daß ein Ende des Kraftglieds (3) zwischen den Scheiben (27) bzw. (27') angeordnet durch einen im innen gehaltenen Lagerbolzen (32) gelagert ist und daß das untere Ende der Querwand (35) des Gelenkteils (4) im arretierbaren Schwenkbereich an der Verbindung (28) der Scheiben (27) bzw. (27') des Zwischenglieds (7') anliegt.

8. Gelenk nach einem der Ansprüche 1 bis 7, mit einem mindestens im arretierbaren Schwenkbereich des Gelenkteils verriegelten, an der Gelenkschale schwenkbar gelagerten Fußteil (5), dadurch gekenn- zeichnet, daß der Fußteil (5) durch einen Fußriegel (17) verriegelbar ist und daß dieser Riegel (17) im arretierbaren Schwenkbereich der Rastenscheibe (7) den Fußteil (5) festhält und in der oberen Endstellung der Rastenscheibe (7) freigibt und dazu dieser Fußriegel (17) direkt oder indirekt durch das Zwischenglied (7', Rastenscheibe 7) gesteuert ist.

9. Gelenk nach Anspruch 4 oder 5 und 8, dadurchgekennzeichnet, daß beide Riegel (17,30) als zweiarmige Hebel ausgebildet sind und daß die freien Enden beider Hebel in der oberen Endlage des Zwischenglieds (7') bzw. der Rastenscheibe (7) aneinander anliegend den Gelenkteil (4) und den Fußteil (5) freigeben.

10. Gelenk nach Anspruch 8 oder 9, bei dem der gabelförmige Fußteil zwei über eine Seitenwand verbundene, an der Gehäuseschale schwenkbar gelagerte Platten aufweist, wobei die Seitenwand als mit der Gehäuseschale zusammenwirkender Endanschlag dient, dadurch gekennzeichnet, daß eine Nase (16) des Fußriegels (17) in einen Durchbruch (15) der Seitenwand (12) oder hinter mindestens einem Vorsprung (43) der Platten (11) einrastbar ist und daß der Fußriegel (17) auf einem in der Gehäuseschale (1) gehaltenen Niet (18) schwenkbar gehalten ist.

### Claims

1. Hinge especially for couches, camp-beds, etc. with an arrestable pivot member (4) carrying a resting surface and pivotable between different angular positions, and with one intermediate member (7'), e.g. an arresting disc (7), cooperating at least with said pivot member (4), wherein the pivot member (4) at least within its pivot range by at least one force member (3), selectively in the form of a spring or gas spring (3'), can at least be pivoted in closing direction in a force-supported manner and arrested by arresting means, characterized in that the intermediate member (7', arresting disc 7) in at least one pivot range or the pivot member (4), between approximately the horizontal position of the resting surface and an approximately vertical position of the same, supports the pivot member (4) in its opening pivot direction or is coupled to the pivot member (4) within this pivot range and is disengaged therefrom in the remaining range of the pivot member (4) respectively.

2. Hinge in accordance to claim 1, characterized in that at least one arrestable gas spring (3) simultaneously serves as arresting means and as a force member, the one end of which is directly or indirectly coupled to the intermediate member (7').

3. Hinge in accordance to claim 1 or 2, characterized in that at least one sheet metal disc (27') pivotable around the same pivotal axis (9) as the resting surface carrying pivot member (4) serves as an intermediate member (7'), said disc being coupled to or disengaged from the pivot member (4) in dependency from its position or in its arrested state supports the pivot member (4) in its opening pivot direction respectively.

4. Hinge in accordance to claim 3, characterized in that a key (30) is pivotably supported by the sheet metal disc (27) against the bias of a spring (40) and cooperates with the resting surface carrying pivot member (4), and that this key (30) can be arrested with the pivot member (4) and thereby the force member (3) directly or indirectly brought into coupling engagement with the pivot member (4), whereby the arresting engagement is controlled by the position of the pivot member (4) or of the intermediate member (7').

5. Hinge in accordance to claim 4, characterized in that the key (30) releases the pivot member (4) in the end position of the intermediate member (7') and is, in all other positions of the intermediate member (7'), coupled to the same.

6. Hinge in accordance to claim 4 or 5, characterized in that the pivot member (4) comprises two preferably approximately triangular side plates (36) connected with each other by a transversely extending wall (35) and extending parallel to the arresting disc (7), and in that in the transversely extending wall (35), arranged opposite to the common axis (9), an opening (34) is provided for the hook (33) of the key (30).

7. Hinge in accordance to claim 5 or 6, characterized in that the intermediate member (7' arresting disc 7) comprises two quarter circle metal sheet discs (27) or metal sheet discs (27') respectively, which as the case may be, carry at their outer periphery arresting teeth (23), said discs being connected to each other at their side opposite to the force member (3) by a connection (28), and in that one end of the force member (3) is positioned between the discs (27 or 27' respectively) or supported by a bearing bolt (37) in the intermediate space, and that the lower end of the transversely extending wall (35) of the pivot member (4) abuts within the arrestable pivot range to the connection means (28) of the disc (27 or 27' respectively) o the intermediate member (7').

8. Hinge, in accordance to one of claims 1 to 7, with at least one base member (5) pivotably supported at the hinge shell and locked at least in the arrestable pivot range of the pivot member, characterized in that the base member (5) can be locked by a base key (17) and that this key (17) fixedly holds the base member (5) within the arrestable range of the arresting disc (7), and releases the same in the upper and position of the arresting disc (7) and that, for this purpose, the base key (17) is directly or indirectly controlled by the intermediate member (7', arresting disc 7).

9. Hinge in accordance to claim 4 or 5 and 8, characterized in that both keys (17, 30) are provided as levers with two arms and that the free ends of both levers in the upper end position of the intermediate member (7', arresting disc 7) abut each other and release the pivot member (4) and the base member (5).

10. Hinge in accordance to claim 8 or 9, with which the forkshaped base member comprises two plates connected to each other and pivotably supported at the housing shell, wherein the side wall serves as an end abutment cooperating with the housing shell, characterized in that a nose (16) of the base key (17) can be locked into an opening (15) of the side wall (12) or behind at least one protrusion (43) of the plates (11), and that the base key (17) is pivotably supported in a rivet (18) provided on the housing shell (1).

## Revendications

1. Articulation, en particulier pour chaises-longues, lits de camp ou autres, avec une pièce d'articulation (4) pivotable et blocable en diverses positions angulaires, portant un dossier, et un organe intermédiaire (7') coopérant avec au moins cette pièce d'articulation (4), par exemple un disque cranté (7), la pièce d'articulation étant, au moins dans sa zone de pivotement où elle peut être bloquée, au moins dans la direction de fermeture, pivotable sous l'action d'une force et fixable par blocage, au moyen d'au moins un organe de force (3) constitué au choix par un ressort ou un ressort à gaz (3'), articulation caractérisée en ce que l'organe intermédiaire (7', disque cranté 7), dans une zone de pivotement de la pièce d'articulation (4) comprise entre la position environ horizontale et la position environ verticale du dossier, soutient cette pièce d'articulation (4) dans sa direction de pivotement d'ouverture, que dans cette zone de pivotement il est couplé avec la pièce d'articulation et dans le reste de la zone de pivotement de la pièce d'articulation (4) il peut pivoter indépendemment de celle-ci.

2. Articulation selon la revendication 1, caractérisée en ce que comme moyen de blocage et en même temps comme organe de force (3), on utilise au moins un ressort à gaz (3') blocable, dont une extrêmité est articulée directement ou indirectement sur l'organe intermédiaire (7').

3. Articulation selon la revendication 1 ou 2, caractérisée en ce que comme organe intermédiaire (7') on utilise au moins un disque en tôle (27') pivotable autour du même axe de pivotement (9) que la pièce d'articulation (4) portant le dossier, ce disque étant couplé avec la pièce d'articulation (4) ou indépendant de celle-ci suivant sa position, ou soutenant la pièce d'articulation (4) dans sa direction de pivotement d'ouverture à l'état bloqué.

4. Articulation selon la revendication 3, caractérisée en ce qu'une manette (30) coopérant avec la pièce d'articulation (4) portant le dossier est montée en pivotement contre un ressort (40) sur le disque en tôle (27') et que cette manette (30) peut s'encliqueter dans la pièce d'articulation (4) et qu'ainsi l'organe de force (3) est couplé directement ou indirectement avec la pièce d'articulation (4), l'encliquetage étant commandé par le site de la pièce d'articulation (4) ou de l'organe intermédiaire (7').

5. Articulation selon la revendication 4, caractérisée en ce que la manette (30) libère la pièce d'articulation (4) dans une position extrême de l'organe intermédiaire (7') et qu'elle est couplée avec cette pièce dans toutes les autres positions de l'organe intermédiaire (7').

6. Articulation selon les revendications 4 ou 5, caractérisée en ce que la pièce d'articulation (4) présente deux plaques latérales (36) de préférence triangulaires, parallèles au disque cranté (7), reliées entre elles par une paroi transversale (35) et que dans la paroi transversale (35) opposée à l'axe commun (9) il est prévu une percée (34) pour le crochet (33) de la manette (30).

7. Articulation selon les revendications 5 ou 6, caractérisée en ce que l'organe intermédiaire (7', disque cranté 7) est constitué par deux disques en tôle en 1/4 de cercle (27) ou deux disques en tôle (27') pertant éventuellement sur leur périphérie le crantage (23), que ces disques sont reliés entre eux par un raccordement (28) sur leur face opposée à l'organe de force (3), et qu'une extrêmité de l'organe de force (3) est disposée entre les disques (27) ou (27') et fixée par un goujon de support (32) maintenu dans ces disques, et que l'extrêmité inférieure de la paroi transversale (35) de la pièce d'articulation (4) jouxte le raccordement (28) des disques (27) ou (27') de l'organe intermédiaire (7') dans la zone de pivotement où le blocage est possible.

8. Articulation selon l'une des revendications de 1 à 7, avec une base (5) montée en pivotement sur l'enveloppe de l'articulation, verrouillant la pièce d'articulation au moins dans la zone de pivotement où le blocage est possible, caractérisée en ce que la base (5) peut être verrouillée au moyen d'une manette (17) et que cette manette (17) bloque le disque cranté (7) de la base (5) dans la zone de pivotement où le blocage est possible et libère le disque cranté (7) dans la position extrême superieure et à cet effet, cette manette (17) est commandée directement ou indirectement par l'organe intermédiaire (7', disque cranté 7).

9. Articulation selon les revendications 4 ou 5 et 8, caractérisée en ce que les deux manettes (17,30) sont réalisées sous forme de levier à deux bras et que les extrêmités libres des deux leviers libèrent la pièce d'articulation (4) et la base (5) dans la position extrême supérieure de l'organe intermédiaire (7') ou du disque cranté (7), tout en étant contiguës.

10.Articulation selon les revendications 8 ou 9, où la base fourchue présente deux plaques montées en pivotement sur l'enveloppe de boîtier, reliées entre elles par une paroi latérale, cette paroi servant de butée coopérant avec l'enveloppe de boîtier, articulation caractérisée en ce qu'un nez (16) de la manette (17) peut s'encliqueter dans une percée (15) de la paroi latérale (12) ou derrière au moins une pièce en saillie (43) des plaques, et que la manette (17) est fixée en pivotement sur un rivet (18) maintenu dans l'enveloppe de boîtier (1).

Fig. 1

# Fig. 2

# Fig. 3

0 071 714

# Fig.5

Fig. 6

8

9

33

2

2'

27

34

1

37

30

27

10

Fig.7

1

2

2'

25

24

21

Fig. 4

1

2

2'

17

18

11

11

11

5

Fig. 8

Fig. 9

Fig.10